# EUROPÄISCHE PATENTSCHRIFT

(11) **EP 0 835 780 B1**
(45) Veröffentlichungstag und Bekanntmachung des Hinweises auf die Patenterteilung: **25.07.2001**
(21) Anmeldenummer: 97114143.7
(22) Anmeldetag: 16.08.1997
(51) Int. Cl.: B60J 7/14

(54) **Kraftfahrzeug mit einem versenkbaren Dach**
Retractable roof for vehicle
Toit escamotable pour véhicule

(30) Priorität: 12.10.1996 DE 19642152
(43) Veröffentlichungstag der Anmeldung: 15.04.1998
(73) Patentinhaber: Wilhelm Karmann GmbH, D-49084 Osnabrück (DE); Bayerische Motoren Werke Aktiengesellschaft, 80788 München (DE)
(72) Erfinder: Rothe, Karl, 49565 Bramsche (DE)
(74) Vertreter: Busse & Busse Patentanwälte

(56) Entgegenhaltungen:
- DE-C- 595 114
- DE-C- 874 860
- DE-C- 4 038 074
- DE-C- 4 435 222
- FR-A- 2 694 245
- US-A- 2 812 975

## Beschreibung

Die Erfindung betrifft ein Kraftfahrzeug mit einem versenkbaren Dach gemäß dem Oberbegriff des Anspruchs 1, das in ein vorderes, ein mittleres und ein rückwärtiges Teilstück unterteilt ist.

Bei einem bekannten Kraftfahrzeug dieser Art (gemäß DE-C-874 860) ist das vordere, das mittlere und das rückwärtige Dach-Teilstück jeweils als eine starre Schale ausgebildet. Die Bewegung der beiden vorderen Schalenteile und deren gemeinsame Ablage mit dem rückwärtigen Verdeckteil im Verdeckkasten erfolgt von Hand und ist für einen ungeübten Benutzer schwierig und zeitaufwendig. In der Öffnungsstellung ist über dem zurückgeklappten Verdeck eine zusätzliche Heckklappe erforderlich.

Der Erfindung liegt die Aufgabe zugrunde, ein Kraftfahrzeug der eingangs genannten Art so auszubilden, daß das auch für ein viersitziges Fahrzeug geeignete dreiteilige Dach mit konstruktiv einfachen Mitteln automatisch in einem engen Bewegungsraum steuerbar ist, die Anwendung einer fest eingebauten Heckscheibe erleichtert und in Öffnungsstellung eine raumsparende Ablage im Verdeckkasten ermöglicht wird.

Die Erfindung löst diese Aufgabe mit einer Dachkonstruktion mit den Merkmalen des Anspruchs 1. Hinsichtlich wesentlicher weiterer Ausgestaltungsmerkmale wird auf die Ansprüche 2 bis 10 verwiesen.

Das erfindungsgemäß ausgebildete Kraftfahrzeug weist eine dreiteilige, insgesamt starre Dachkonstruktion auf, deren Dach-Teilstücke bei Verlagerung in Öffnungsstellung zum Verdeckkasten hin auf einer engen Bewegungsbahn zwangsgesteuert verschwenkt werden können. Das eine feste Heckscheibe aufweisende rückwärtige Dach-Teilstück wird dabei konzentrisch mit den beiden vorgeordneten Dach-Teilstücken in einer ersten Schwenkphase kreisbogenförmig um einen karosserieseitigen Lagerpunkt entgegen der Fahrtrichtung bewegt und im Verbindungsbereich zum Windschutzscheibenrahmen abgehoben.

In einer dabei erreichten Schwenkstellung werden nunmehr die beiden vorderen Dach-Teilstücke zum Fahrzeuginnenraum hin mit einem vertikalen Höhenversatz zueinander in eine Absenkstellung verbracht und danach über eine parallele Verschiebung in Richtung zum Verdeckkasten hin bis unter das rückwärtige Dach-Teilstück verlagert. In dieser Übereinanderlage der drei Dach-Teilstücke wird das rückwärtige Dach-Teilstück aus seiner bisher beibehaltenen Schwenkstellung gelöst und gemeinsam mit dem vorderen Dach-Teilstück sowie dem mittleren Teilstück über eine SchwenkSchub-Bewegung in den Verdeckkasten eingeführt und in einer insgesamt raumsparenden Packstellung so abgelegt, daß die Verdeckkasten-Öffnung von zumindest einem Teilbereich der Oberseite des rückwärtigen Dach-Teilstückes abgedeckt ist.

Die Steuerung dieser Öffnungs- bzw. Schließbewegung der drei starren Dach-Teilstücke erfolgt dabei über vorteilhaft wenige Gestängebauteile und jeweilige randseitige Antriebsorgane, so daß mit wenigen Bauteilen die Dachkonstruktion ein geringes Gewicht aufweist und die dachintegrierten Gestängeteile raumsparend so angeordnet werden können, daß auch der Fahrgastinnenraum weitgehend unbeeinflußt bleibt.

Weitere Einzelheiten und Vorteile der Erfindung ergeben sich aus der nachfolgenden Beschreibung und den Zeichnungen, die ein Ausführungsbeispiel des erfindungsgemäßen Kraftfahrzeugs mit versenkbarem Dach veranschaulichen. In der Zeichnung zeigen:
- Fig. 1: eine perspektivische Seitenansicht eines Kraftfahrzeugs mit einem drei Dach-Teilstücke aufweisenden Dach in Schließstellung,
- Fig. 2: eine teilweise geschnittene Seitenansicht des Kraftfahrzeugs gemäß Fig. 1,
- Fig. 3: eine Seitenansicht ähnlich Fig. 2 mit einer beweglichen, in einer ersten Öffnungsphase befindlichen Heckscheibe,
- Fig. 4 bis Fig. 6: jeweilige Ausschnittsdarstellungen des Kraftfahrzeugs mit der Heckscheibe in Öffnungsstellung und den Dach-Teilstücken in unterschiedlichen Bewegungsphasen, und
- Fig. 7: eine Ausschnittsdarstellung des Kraftfahrzeugs mit den drei Dach-Teilstücken in Ablagestellung in einem Verdeckkasten.

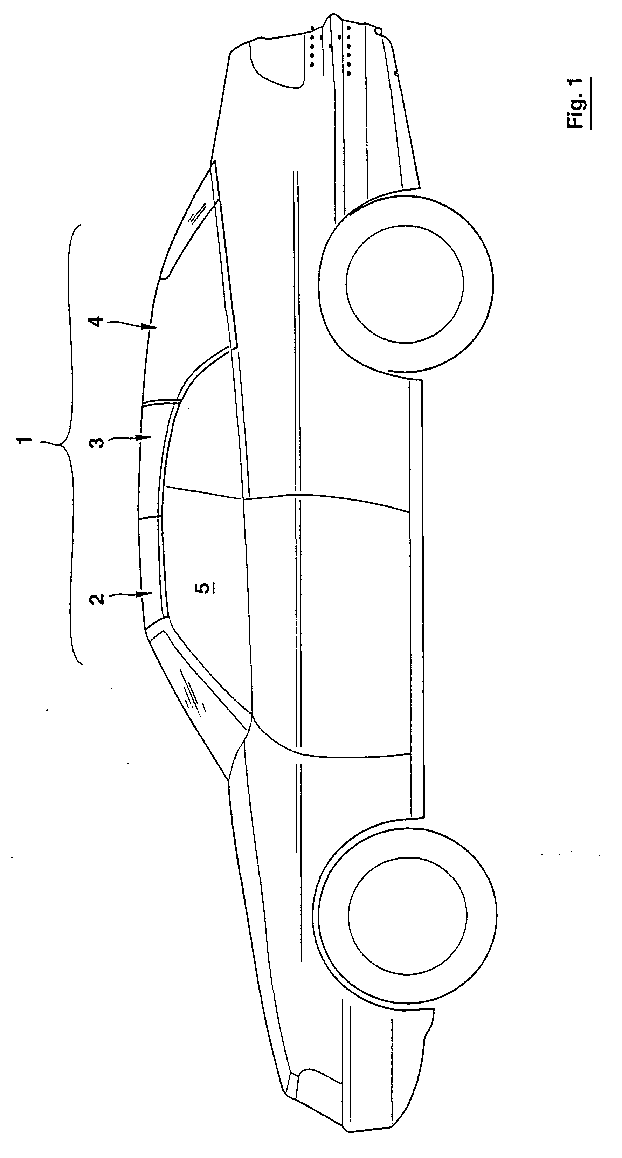

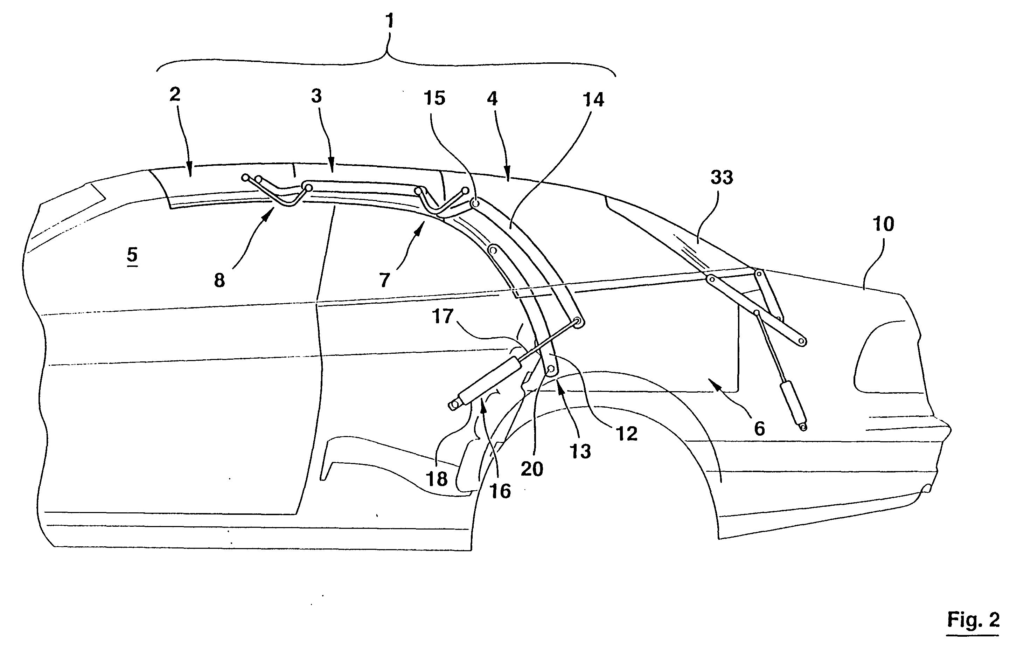

In Fig. 1 ist ein Kraftfahrzeug mit einem insgesamt mit 1 bezeichneten versenkbaren Dach dargestellt, das ein vorderes Teilstück 2, ein mittleres Teilstück 3 und ein rückwärtiges Teilstück 4 aufweist, die gemeinsam aus der dargestellten, einen Fahrzeuginnenraum 5 überdeckenden Schließstellung in eine Öffnungsstellung unter Ablage in einem heckseitigen Verdeckkasten 6 (Fig. 2) überführbar sind. Die Bauteile für diese Verdeckkinematik sind jeweils randseitig an den Dach-Teilstücken 2, 3, 4 symmetrisch zur Fahrzeuglängsachse angeordnet, so daß damit die nachfolgend für jeweils eine Fahrzeugseite dargestellten und beschriebenen Bauteile mit gegenüberliegenden Teilen korrespondieren.

Das erfindungsgemäß ausgebildete Kraftfahrzeug weist ein Dach 1 auf, dessen vorderes 2, mittleres 3 und rückwärtiges Dach-Teilstück 4 jeweils als eine in sich starre Schale ausgeführt sind, die über zwischenliegende Gelenkverbinder 7, 8 miteinander verbunden sind.

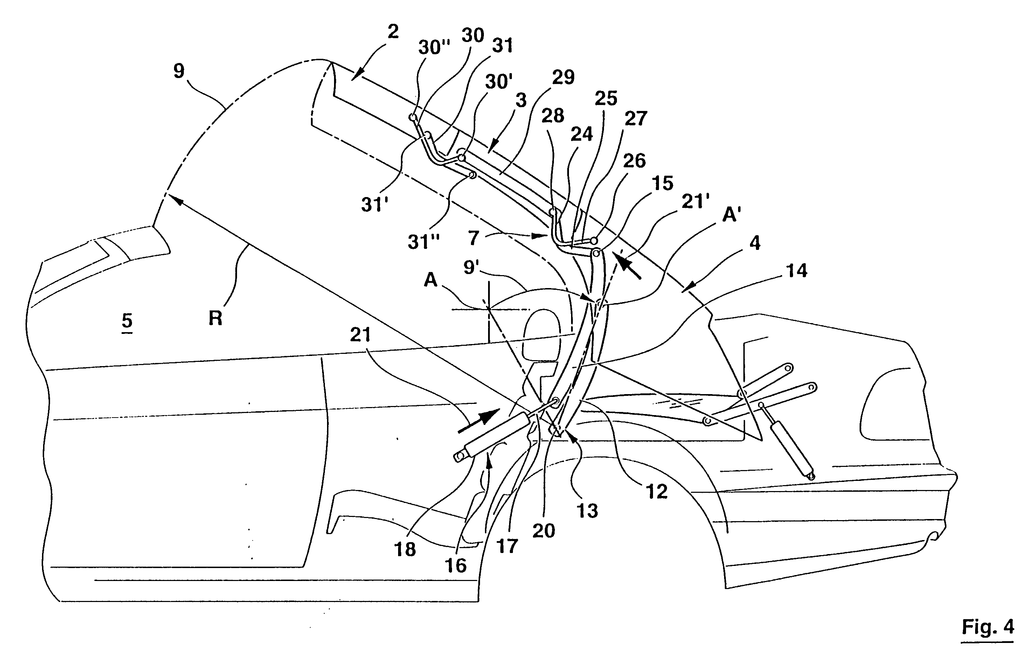

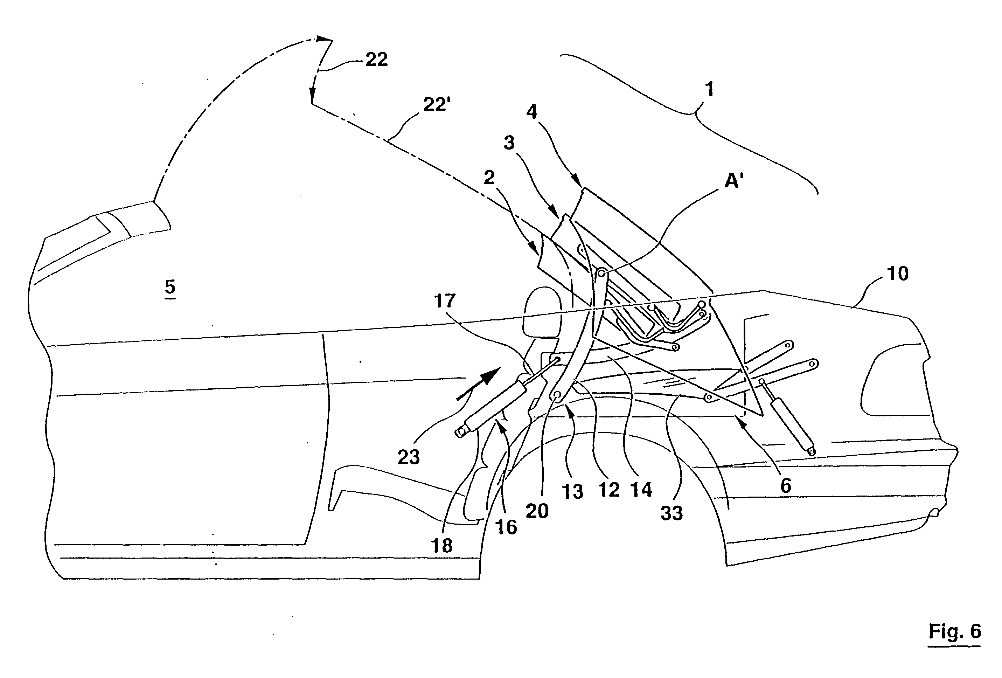

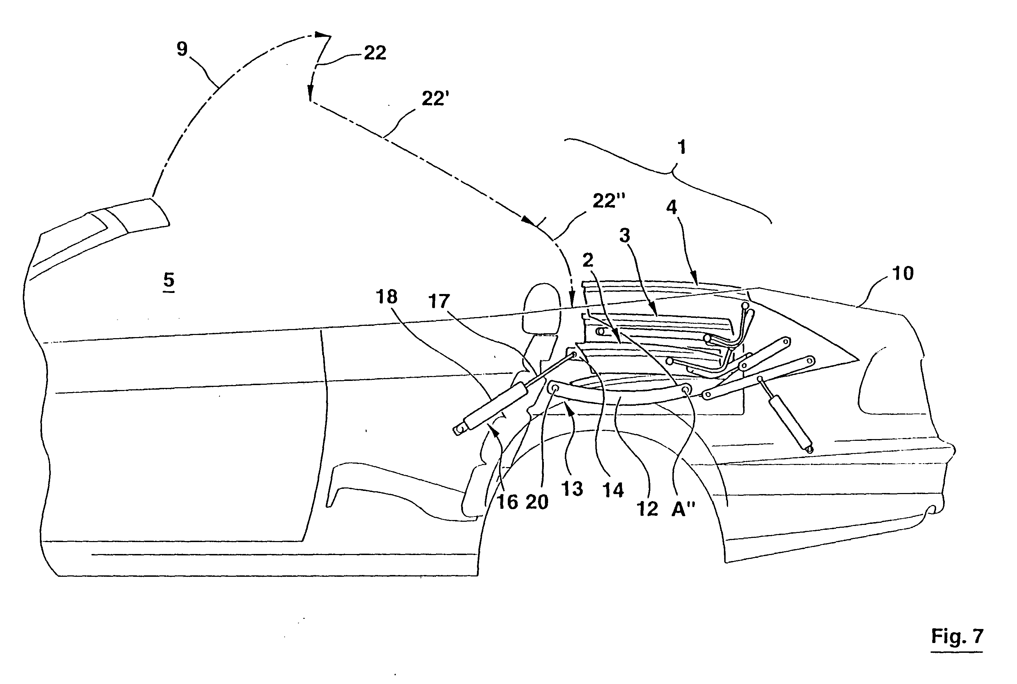

Die unterschiedlichen Bewegungsphasen gemäß Fig. 4 bis Fig. 7, mit denen beispielhaft die Verlagerung des Daches 1 zum Verdeckkasten 6 (Fig. 7) hin dargestellt ist, verdeutlichen, daß die drei Dach-Teilstücke beim Öffnungs vorgang zunächst gemeinsam entgegen der Fahrtrichtung verschwenkbar sind (Bahnkurve gemäß Pfeil 9 und 9'- Fig. 4) und danach das vordere Dach-Teilstück 2 unter das mittlere Dach-Teilstück 3 sowie beide gemeinsam mit einer vorzugsweise synchronen Absenkbewegung unter das rückwärtige Dach-Teilstück 4 verlagert werden (Fig. 6). In dieser Übereinanderlage können nunmehr alle drei Dach-Teilstücke 2, 3, 4 gemeinsam in die Packstellung (Fig. 7) eingeschwenkt werden. In dieser Packstellung bildet das rückwärtige Dach-Teilstück 4 ein den Verdeckkasten 6 übergreifendes und im wesentlichen einen karosseriekonformen Abschluß bildendes Deckelteil, so daß der Bereich zwischen einem Kofferraumdeckel 10 und dem Fahrgastraum 5 weitgehend abgeschlossen ist.

Für eine automatische zwangsgesteuerte Ausführung des vorbeschriebenen Öffnungsvorganges (der sich in umgekehrter Bewegungsabfolge beim Schließvorgang wiederholt)greift das rückwärtige Dach-Teilstück 4 einenends schwenkbeweglich an einer Führungsstange 12 an (Gelenkpunkt A), die anderenends an einem karosserieseitigen Hauptlager 13 abgestützt ist. Gleichzeitig ist am rückwärtigen Dach-Teilstück 4 nahe dem zum mittleren Dach-Teilstück 3 gerichteten Gelenkverbinder 7 ein Antriebshebel 14 in einem Gelenkpunkt 15 angelenkt. Anderenends ist am Antriebshebel 14 ein karosserieseitig abgestütztes Antriebsorgan 16 vorgesehen, wobei dieses insbesondere von einem Hubzylinder 18 mit einer Kolbenstange 17 gebildet ist.

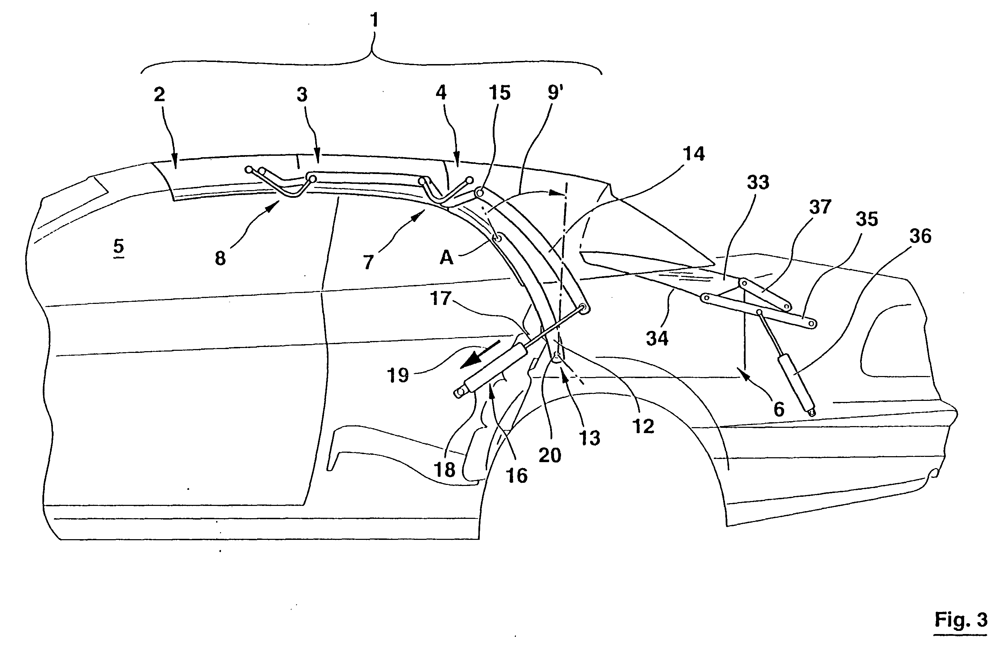

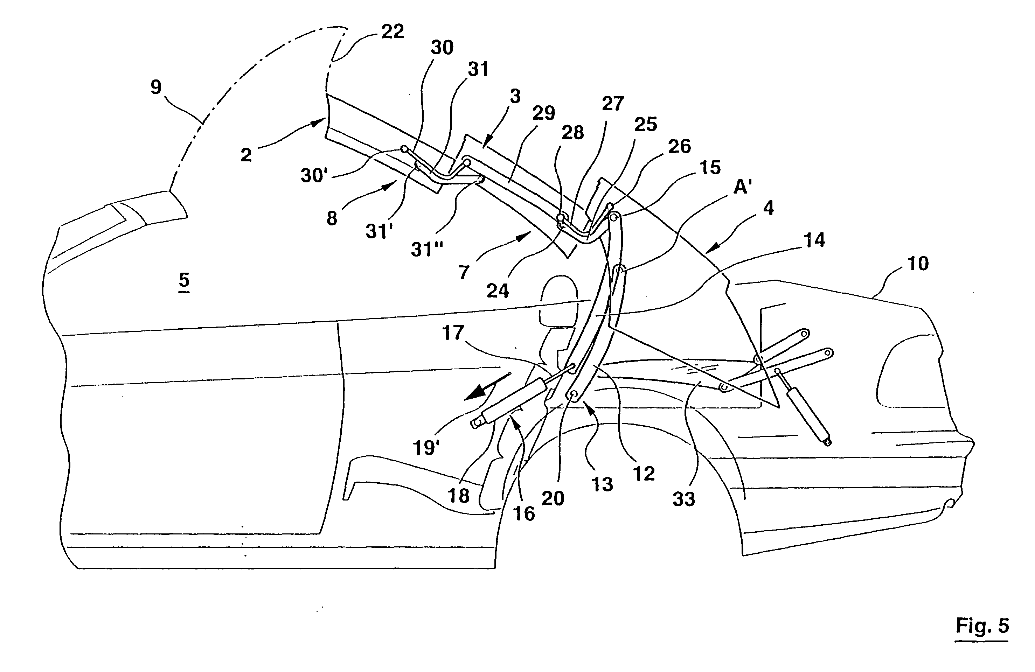

Mit diesen wenigen Bauteilen ist eine konstruktiv einfache und störunanfällige Antriebseinheit für das Dach 1 gebildet, mittels der die Führungsstange 12 bei Einleitung einer Zugbewegung (Pfeil 19, Fig. 3) über das antriebsseitige Ende des Antriebshebels 14 eine kreisbogenförmige Bahnkurve (Pfeil 9'; A - A') durchläuft, so daß die drei Dach-Teilstücke insgesamt konzentrisch zum Gelenkpunkt 20 des Hauptlagers 13 bewegt werden (Radius R, Fig. 4). Die Führungsstange 12 wird danach in dieser ersten Schwenkstellung (Pfeil 9', A' in Fig. 4) derart festgelegt, daß nunmehr über eine Schubbewegung (Pfeil 21, 21') der Kolbenstange 17 bzw. des Antriebshebels 14 sowohl dem mittleren als auch dem vorderen Dach-Teilstück 2, 3 eine synchrone Absenkbewegung vermittelt wird und diese in eine Versatzstellung zueinander gelangen (Fig. 5). Mittels einer Umkehr der Kolbenstangenbewegung (Zugrichtung 19' - Fig. 5) werden die Dach-Teilstücke 2 und 3 nunmehr ineinander geschachtelt und gleichzeitig bis unterhalb des rückwärtigen Dach-Teilstückes 4 verlagert (Bewegungsbahn 22, 22' - Fig. 6).

In dieser Übereinanderlage der Dach-Teilstücke 2, 3, 4 wird jetzt die Führungsstange 12 für eine weitere Bewegungsphase freigegeben, wobei durch eine wiederholte Schubumkehr im Bereich des Antriebsorgans 16 bzw. der Kolbenstange 17 (Pfeil 23 - Fig. 6) eine zweite kreisbogenförmige Schwenkphase der Führungsstange 12 eingeleitet und das Dach 1 in die Packstellung eingeschwenkt wird (Bewegungsbahn 22'' - Fig. 7).

Für den vorbeschriebenen Bewegungsablauf der Dach-Teilstücke 2 und 3 greift der Antriebshebel 14 im Bereich des ersten Gelenkverbinders 7 an einem am mittleren Dachteil 3 einem Gelenkpunkt 24 bildenden Winkelhebel 25 an (Fig. 4), wobei parallel zu diesem ein am rückwärtigen Dach-Teilstück 4 gelagerter (Gelenkpunkt 26), zweiter Winkel hebel 27 vorgesehen ist. Der zweite Winkelhebel 27 ist an seinem freien Ende an einer in Längsrichtung des mittleren Dach-Teilstückes 3 verlaufenden Schwingstange 29 angelenkt (Gelenkpunkt 28) und diese anderenends an einem dritten Winkelhebel 30 abgestützt (Gelenkpunkt 30'), an dem gemeinsam mit einem parallelen vierten Winkelhebel 31 das vordere Dach-Teilstück 2 schwenkbeweglich gehaltert ist (Gelenkpunkte 30'', 31' und 31'').

Diese jeweils paarweise zusammenwirkenden Winkelhebel 25, 27 und 30, 31 bilden jeweilige Viergelenke, so daß bei Einleitung der vorbeschriebenen Antriebsbewegung über den Antriebshebel 14 mit geringem Aufwand eine optimale Bewegungseinleitung und Zwangssteuerung der Bauteile des dreiteiligen Daches 1 erreicht ist.

In der dargestellten Ausführungsform des Daches 1 ist das rückwärtige Dach-Teilstück 4 mit einer unabhängig von diesem in den Verdeckkasten 6 verlagerbaren Heckscheibe 33 versehen, wobei diese über einen an deren Seitenrand 34 angreifenden Schwenkhebel 35 mit Antriebsorgan 36 sowie einen am Querseitenrand angreifenden Schwenkhebel 37 derart abgestützt ist, daß insbesondere vor einer Einleitung der vorbeschriebenen Öffnungsbewegungen des Daches 1 die Heckscheibe 33 in einer bodenseitigen Ablagestellung (Fig. 3, Fig. 4) im Verdeckkasten 6 positionierbar ist.

## Patentansprüche

1. Kraftfahrzeug mit einem versenkbaren Dach (1), das in ein vorderes (2), ein mittleres (3) und ein rückwärtiges Teilstück (4) unterteilt ist, die aus einer gemeinsamen, den Fahrzeuginnenraum (5) überdeckenden Schließstellung in eine Öffnungsstellung unter Ablage in einem heckseitigen Verdeckkasten (6) überführbar sind, wobei das vordere (2), das mittlere (3) und das rückwärtige Dach-Teilstück (4) als starre Schale ausgeführt und über Gelenkverbinder (7,8) miteinander verbunden sind, **dadurch gekennzeichnet,** daß das rückwärtige Dach-Teilstück (4) an einer an einem karrosserieseitigen Hauptlager (13) abgestützten Führungsstange (12) und an einem von einem Antriebsorgan (16) beaufschlagten Antriebshebel (14) gelagert ist und damit die Gelenkverbinder (7,8) derart zwangsgesteuert sind, daß in der Öffnungsstellung das vordere und mittlere Dach-Teilstück (2,3) unter das rückwärtige Dach-Teilstück (4) verlagert sind und dieses in der Packstellung eine Abdeckung des Verdeckkastens (6) bildet.

2. Kraftfahrzeug nach Anspruch 1, dadurch gekennzeichnet, daß das rückwärtige Dach-Teilstück (4) in Öffnungsstellung des Daches (1) ein den Verdeckkasten (6) übergreifendes Deckelteil bildet.

3. Kraftfahrzeug nach Anspruch 1 oder 2, dadurch gekennzeichnet, daß das rückwärtige Dach-Teilstück (4) mit einer unabhängig von diesem in den Verdeckkasten (6) verlagerbaren Heckscheibe (33) versehen ist.

4. Kraftfahrzeug nach einem der Ansprüche 1 bis 3, dadurch gekennzeichnet, daß das rückwärtige Dach-Teilstück (4) einenends schwenkbeweglich an der Führungsstange (12) angreift, die anderenends in dem karosserieseitigen Hauptlager (13) abgestützt ist.

5. Kraftfahrzeug nach einem der Ansprüche 1 bis 4, dadurch gekennzeichnet, daß am rückwärtigen Dach-Teilstück (4) nahe des zum mittleren Dach-Teilstück (3) gerichteten ersten Gelenkverbinders (7) der Antriebshebel (14) angelenkt ist, der anderenends mit dem karosserieseitig abgestützten Antriebsorgan (16) verbunden ist.

6. Kraftfahrzeug nach einem der Ansprüche 1 bis 5, dadurch gekennzeichnet, daß die Führungsstange (12) bei Einleitung einer Zugbewegung am antriebsseitigen Ende des Antriebshebels (14) eine kreisbogenförmige Bahnkurve konzentrisch zu den drei Dach-Teilstücken (2, 3, 4) durchläuft und in einer ersten Schwenkstellung (A') derart festlegbar ist, daß danach über Schub- und/oder Zugbewegungen des Antriebshebels (14) dem mittleren und dem vorderen Dach-Teilstück (2, 3) die synchrone Absenkbewegung bis unterhalb des rückwärtigen Dach-Teilstückes (4) vermittelbar ist.

7. Kraftfahrzeug nach einem der Ansprüche 1 bis 6, dadurch gekennzeichnet, daß die in Übereinanderlage befindlichen drei Dach-Teilstücke (2, 3, 4) nach einer Entriegelung der Führungsstange (12) und Einleitung einer zweiten kreisbogenförmigen Schwenkphase (A'') in die Packstellung einschwenkbar sind.

8. Kraftfahrzeug nach einem der Ansprüche 1 bis 7, dadurch gekennzeichnet, daß der Antriebshebel (14) im Bereich des ersten Gelenkverbinders (7) an einem am mittleren Dachteil (3) einen Gelenkpunkt (15) bildenden Winkelhebel (25) angreift, parallel zu diesem ein am rückwärtigen Dach-Teilstück (4) gelagerter zweiter Winkelhebel (27) vorgesehen ist, der anderenends an einer in Längsrichtung des mittleren Dach-Teilstückes (3) verlaufenden Schwingstange (29) angreift und diese ihrerseits anderenends einen dritten Winkelhebel (30) abstützt, an dem gemeinsam mit einem parallelen vierten Winkelhebel (31) das vordere Dach-Teilstück (2) gehaltert ist.

9. Kraftfahrzeug nach Anspruch 8, dadurch gekennzeichnet, daß die paarweise zusammenwirkenden Winkelhebel (25, 27 und 30, 31) jeweils ein Viergelenk bilden.

10. Kraftfahrzeug nach einem der Ansprüche 1 bis 9, dadurch gekennzeichnet, daß die am rückwärtigen Dach-Teilstück (4) vorgesehene Heckscheibe (33) über einen an deren Seitenrand (34) angreifenden Schwenkhebel (35) mit Antriebsorgan (36) und einen am Querseitenrand angreifenden Schwenkhebel (37) abgestützt ist.

## Claims

1. A motor vehicle with a retractable roof (1) which is sub-divided into a front (2), a middle (3) and a rear part (4) and which can be moved from a jointly closed position covering the interior (5) of the vehicle into an open position, being stowed in a rear covered compartment (6), whereby the front (2), the middle (3) and the rear roof part (4) are constructed as rigid shells and are connected to one another via articulating joints (7, 8), characterised in that the rear roof part (4) is mounted on a guide rod (12) supported on a main bearing (13) rigid with the body and which is subject to the action of a drive means (16) and in that the articulating joints (7, 8) are in this way positively controlled in that in the opening position the front and middle roof parts (2, 3) are mounted under the rear roof part (4) and in this position form a covering for the covered compartment (6).

2. A motor vehicle according to claim 1, characterised in that in the open position of the roof (1), the rear roof part (4) constitutes a roof part which engages over the covered compartment (6).

3. A motor vehicle according to claim 1 or 2, characterised in that the rear roof part (4) is provided with a tail plate (33) adapted for independent movement thereof into the covered compartment (6).

4. A motor vehicle according to one of claims 1 to 3, characterised in that the rear roof part (4) has one end which pivotally engages the guide rod (12) which is at the other end supported in the main bearing (13) rigid with the body work.

5. A motor vehicle according to one of claims 1 to 4, characterised in that articulated on the rear roof part (4), close to the first articulating joint (7) which is close to the middle roof part (3), there is the drive lever (14) the other end of which is connected to the drive means (16) which is rigid with the body work.

6. A motor vehicle according to one of claims 1 to 5, characterised in that when a traction movement is applied to the drive end of the drive lever (14), the guide rod (12) passes through an arcuately curved part concentric with the three roof parts (2, 3, 4) and can be so fixed in a first pivoted position (A') that subsequently, by push-and/or-pull movements of the drive lever (14), the synchronised retracting movement can be imparted to the middle and the front roof parts (2, 3) until they are under the rear roof part (4).

7. A motor vehicle according to one of claims 1 to 6, characterised in that once the guide rod has been unlocked and a second arcuate pivoting phase (A") has been instituted, the three roof parts (2, 3, 4) which are in a superposed relationship can be pivoted into the stowed position.

8. A motor vehicle according to one of claims 1 to 7, characterised in that in the region of the first articulated joint (7), the drive lever (14) engages an angled lever (25) which forms a point of articulation (15) on the middle roof part (3) and in that parallel with this latter there is a second angled lever (27) mounted on the rear roof part (4) and which, at the other end, engages a swinging rod (29) extending in a longitudinal direction of the middle roof part (3), said swinging rod (29) supporting at its other end a third angled lever (30) on which the front roof part (2) is mounted jointly with a parallel and fourth angled lever (31).

9. A motor vehicle_according to claim 8, characterised in that the pairwisely cooperating angled levers (25, 27 and 30, 31) respectively form a four-bar linkage.

10. A motor vehicle according to one of claims 1 to 9, characterised in that the rear window (33) provided on the rear roof part (4) is braced via a pivot lever (35) with a drive means (36) and engaging its lateral edge (34) and a pivot lever (37) engaging the transverse lateral edge.

## Revendications

1. Véhicule automobile équipé d'un toit escamotable (1) divisé en une partie avant (2), une partie médiane (3) et une partie arrière (4) qui peuvent passer d'une position commune de fermeture où elles recouvrent l'habitacle (5) du véhicule à une position d'ouverture avec dépôt dans un caisson arrière de capote (8), ces parties avant (2), médiane (3) et arrière (4) étant constituées par des coquilles rigides reliées par des liaisons articulées (7, 8),
caractérisé en ce que
la partie arrière de toit (4) est monté sur une tige de guidage (12) en appui sur un palier principal (13) situé du côté de la carrosserie et sur un levier d'entraînement (14) actionné par un organe d'entraînement (16), les liaisons articulées (7, 8) étant commandées impérativement de manière qu'en position d'ouverture la partie avant et la partie médiane de toit (2, 3) sont transférées sous la partie arrière de toit (4) qui, dans cette position d'empaquetage forme une couverture du caisson de capote (6).

2. Véhicule automobile selon la revendication 1,
caractérisé en ce que
la partie arrière de toit (4), quand le toit est ouvert, constitue une partie de couvercle en prise par-dessus avec le caisson de capote (6).

3. Véhicule automobile selon la revendication 1 ou 2,
caractérisé en ce que
la partie arrière de toit (4) est équipée d'une lunette (33) qui peut être déposée indépendamment de cette partie, dans le caisson de capote (6).

4. Véhicule automobile selon l'une quelconque des revendications 1 à 3,
caractérisé en ce que
la partie arrière de toit (4) est en prise avec possibilité de basculement avec l'extrémité de la tige de guidage (12) qui s'appuie par son autre extrémité sur le palier principal (13) situé du côté de la carrosserie.

5. Véhicule automobile selon l'une quelconque des revendications 1 à 4,
caractérisé en ce que
sur la partie arrière de toit (4) et près de la première liaison d'articulation (7) avec la partie médiane de toit (3) est articulé le levier d'entraînement (14) qui à son autre extrémité, est relié à l'organe d'entraînement (16) en appui sur la carrosserie.

6. Véhicule automobile selon l'une quelconque des revendications 1 à 5,
caractérisé en ce que
la tige de guidage (12) quand un mouvement de traction est engagé sur l'extrémité, côté entraînement, du levier d'entraînement (14), fait décrire aux trois parties de toit (2, 3, 4) des trajectoires en arc de cercle concentriques et vient se fixer en une première position de basculement (A') de manière qu'ensuite, par des mouvements de poussée et/ou de traction du levier d'entraînement (14) on peut faire descendre, en synchronisme les parties avant et médiane de toit (2, 3) pour les amener en dessous de la partie arrière de toit (4).

7. Véhicule automobile selon l'une quelconque des revendications 1 à 6,
caractérisé en ce que
les trois parties de toit (2, 3, 4) se trouvant en superposition peuvent, après déverrouillage de la tige de guidage (12) et engagement d'une seconde phase de basculement en arc de cercle (A") être amenées à la position d'empaquetage.

8. Véhicule automobile selon l'une quelconque des revendications 1 à 8,
caractérisé en ce que
le levier d'entraînement (14), dans la zone de la première liaison articulée (7) est en prise avec un levier coudé (25) créant sur la partie médiane de toit (3) un point d'articulation (15) et, parallèlement à ce levier est articulé sur la partie arrière de toit (4) un second levier (27) dont l'autre extrémité est en prise avec une tige basculante (29) disposée selon la direction longitudinale de la partie médiane de toit (3) et qui de son côté, par son autre extrémité, soutient un troisième levier coudé (30), la partie avant de toit (2) étant montée sur ce levier et sur un quatrième levier (31) parallèle au troisième.

9. Véhicule automobile selon la revendication 8,
caractérisé en ce que
les leviers coudés coopérant par paires (25, 27 et 30, 31) forment chaque fois une quadruple articulation.

10. Véhicule automobile selon l'une quelconque des revendications 1 à 9,
caractérisé en ce que
la lunette (33) prévue dans la partie arrière de toit (4) est montée en appui par l'intermédiaire d'un levier basculant (35), en prise avec son bord latéral (34) et associé à un organe d'entraînement (36), et d'un levier basculant (37) en prise avec son bord transversal.
